# EUROPEAN PATENT APPLICATION

(11) **EP 4 130 146 A1**
(43) Date of publication of application: **08.02.2023**
(21) Application number: 21776540.3
(22) Date of filing: 22.03.2021
(51) Int. Cl.: C08L 27/18, H01B 11/02, H01B 11/18

(54) **ELECTRICAL WIRE FOR IN-VEHICLE NETWORK CABLE, AND IN-VEHICLE NETWORK CABLE**

(30) Priority: 25.03.2020 JP 2020054292
(71) Applicant: Daikin Industries, Ltd., Osaka-shi, Osaka 530-0001 (JP)
(72) Inventor: ISAKA, Tadaharu, Osaka-Shi, Osaka 530-8323 (JP); YAMAMOTO, Yukari, Osaka-Shi, Osaka 530-8323 (JP); ZENKE, Yumi, Osaka-Shi, Osaka 530-8323 (JP)
(74) Representative: Hoffmann Eitle
(86) International application number: PCT/JP2021/011739
(87) International publication number: WO 2021/193545

(57) **Abstract**

The disclosure provides an electric wire for an in-vehicle network cable in the form of a lightweight, well-foldable thin line including a small-diameter conductor and a thin covering layer having a uniform capacitance thereon, the covering of which can maintain its shape and less suffer damage even after long-term exposure to a 150°C environment and has excellent electrical characteristics. The disclosure relates to an electric wire for an in-vehicle network cable, including a conductor and a covering that covers a periphery of the conductor. The electric wire has a diameter of 0.5 to 1.5 mm. The covering contains a fluororesin that is a tetrafluoroethylene/hexafluoropropylene/perfluoro(alkyl vinyl ether) copolymer. The fluororesin has a melt flow rate of 20 to 40 g/10 min measured at 372°C under a 5-kg load, a relative permittivity of 2.2 or lower measured at 25°C and 6 GHz, a melting point of 250°C or higher, an MIT folding endurance of 2000 times or more, and a tensile elongation at 150°C of 300% or higher.

## Description

### TECHNICAL FIELD

The disclosure relates to electric wires for in-vehicle network cables and in-vehicle network cables.

### BACKGROUND ART

Communication networks are widely used in offices, homes, and other locations. A recent increase in the amount of communication data due to, for example, introduction of autonomous driving assistant systems generates a demand for a higher communication speed even in vehicles and therefore results in introduction of network cables, such as Ethernet^{®}, that enable high-speed communication.

Patent Literature 1 discloses a shield twisted pair cable including a twisted pair cable that includes a pair of core electric wires with a signal conductor being surrounded by an insulating covering and drain wires, a conductor foil that covers the outer periphery of the twisted pair cable, and a sheath insulation layer that covers the outer periphery of the conductor foil, the twisted pair cable including at least two or more drain wires twisted together.

### CITATION LIST

### - Patent Literature

Patent Literature 1: JP 2008-287948 A

### SUMMARY OF INVENTION

### - Technical Problem

The disclosure aims to provide an electric wire for an in-vehicle network cable in the form of a lightweight, well-foldable thin line including a small-diameter conductor and a thin covering layer having a uniform capacitance thereon, the covering of which can maintain its shape and less suffer damage even after long-term exposure to a 150°C environment and has excellent electrical characteristics.

### - Solution to Problem

The disclosure relates to an electric wire for an in-vehicle network cable, including: a conductor; and a covering that covers a periphery of the conductor, the electric wire having a diameter of 0.5 to 1.5 mm, the covering comprising a fluororesin that is a tetrafluoroethylene (TFE)/hexafluoropropylene (HFP)/perfluoro(alkyl vinyl ether) (PAVE) copolymer, the fluororesin having a melt flow rate (MFR) of 20 to 40 g/10 min measured at 372°C under a 5-kg load, a relative permittivity of 2.2 or lower measured at 25°C and 6 GHz, a melting point of 250°C or higher, an MIT folding endurance of 2000 times or more, and a tensile elongation at 150°C of 300% or higher.

The fluororesin preferably has a loss tangent of 0.0006 or lower measured at 25°C and 6 GHz.

The fluororesin preferably contains a tetrafluoroethylene/hexafluoropropylene/perfluoro(propyl vinyl ether) copolymer.

The disclosure also provides an in-vehicle network cable including the electric wire for an in-vehicle network cable of the disclosure.

Preferably, the in-vehicle network cable of the disclosure includes a twisted pair cable including a pair of electric wires twisted together, and at least one of the pair of electric wires is the electric wire for an in-vehicle network cable of the disclosure.

### - Advantageous Effects of Invention

The electric wire for an in-vehicle network cable of the disclosure, which has the above structure, can be in the form of a lightweight, well-foldable thin line including a small-diameter conductor and a thin covering layer having a uniform capacitance thereon, and the covering can maintain its shape and less suffer damage even after long-term exposure to a 150°C environment and has excellent electrical characteristics.

### DESCRIPTION OF EMBODIMENTS

Patent Literature 1 discloses, as examples of material of the covering layer of the electric wire, polyvinyl chloride, polyethylene, polypropylene, polytetrafluoroethylene (PTFE), a tetrafluoroethylene-hexafluoropropylene copolymer (FEP), a tetrafluoroethylene-perfluoroalkyl vinyl ether copolymer (PFA), and other fluororesins. Still, the literature fails to disclose what types of resin is suitable for network cables for automobiles.

In the case of in-vehicle applications, network cables are required to include a covering having a uniform capacitance for reduced transmission loss as in the case of conventional network cables, as well as to be lightweight and easily foldable for laying of the cables inside vehicles. Further, the cables are placed in severe environments and exposed to, for example, folding, vibration during driving, direct sunlight in the summer, and heat from the engine. This results in the finding that the covering is required to have excellent durability such that it can maintain its shape and less suffer damage even after long-term exposure to temperatures around 150°C.

The electric wire for an in-vehicle network cable of the disclosure includes a conductor and a covering that covers a periphery of the conductor, the electric wire having a diameter of 0.5 to 1.5 mm, the covering containing a fluororesin that is a TFE/HFP/PAVE copolymer, the fluororesin having a MFR of 20 to 40 g/10 min measured at 372°C under a 5-kg load, a relative permittivity of 2.2 or lower measured at 25°C and 6 GHz, a melting point of 250°C or higher, an MIT folding endurance of 2000 times or more, and a tensile elongation at 150°C of 300% or higher. The electric wire for an in-vehicle network cable of the disclosure was completed as a result of the finding that the above specific fluororesin among fluororesins can lead to a uniform capacitance of the covering for reduced transmission loss required for network cables, and has a light weight and easy foldability for laying of the cables inside vehicles, and excellent durability such that it can maintain its shape and less suffer damage even after long-term exposure to temperatures around 150°C, so that the fluororesin can be used for an electric wire for an in-vehicle network cable. The disclosure also provides use of the electric wire for an in-vehicle network cable of the disclosure for an in-vehicle network cable.

The conductor used may be a metal conductive material such as copper or aluminum, or a metal conductive material prepared by plating any of the former materials with a metal such as silver or titanium. The conductor may be a single wire or may be a twisted wire including thin conductors twisted together. The conductor preferably has a diameter of 0.1 to 1.0 mm. For twisted wires, the diameter of the conductor refers to the whole diameter of the twisted wire. In terms of electrical characteristics, the conductor is preferably thick and the diameter of the conductor is more preferably 0.2 mm or greater, still more preferably 0.3 mm or greater, particularly preferably 0.4 mm or greater. In terms of weight reduction, easy foldability, and reduction in expensive cost of the conductor, the conductor is preferably thin and the diameter is more preferably 0.9 mm or smaller, still more preferably 0.8 mm or smaller, particularly preferably 0.7 mm or smaller, most preferably 0.65 mm or smaller. Specific examples of the conductor include AWG-26 (solid copper wire having a diameter of 404 micrometers), AWG-24 (solid copper wire having a diameter of 510 micrometers), and AWG-22 (solid copper wire having a diameter of 635 micrometers).

An in-vehicle network cable is laid inside a vehicle so that the cable may be routed in a narrow laying path and may be folded at many sites. Thus, in terms of the thickness of the covering, the cable is preferably a thin line having a small diameter. Accordingly, in terms of weight reduction, easy foldability, and reduction in cost of the covering material, the thickness of the covering is also preferably thin and is preferably 0.5 mm or smaller, more preferably 0.4 mm or smaller, still more preferably 0.3 mm or smaller, particularly preferably 0.25 mm or smaller. In terms of electrical characteristics, the thickness of the covering is preferably thick and is preferably 0.1 mm or greater, more preferably 0.15 mm or greater.

The electric wire for an in-vehicle network cable of the disclosure has a diameter of 0.5 to 1.5 mm. An in-vehicle network cable is laid inside a vehicle and is therefore preferably lightweight. Also, an in-vehicle network cable may be routed in a narrow laying path and may be folded at many sites, and is therefore preferably a thin line having a small diameter and thus having excellent easy foldability. The diameter is preferably 1.4 mm or smaller, more preferably 1.3 mm or smaller, still more preferably 1.2 mm or smaller, particularly preferably 1.1 mm or smaller, most preferably 1.0 mm or smaller. In terms of electrical characteristics, the diameter of the electric wire is preferably thick and is preferably 0.6 mm or greater, more preferably 0.7 mm or greater, still more preferably 0.8 mm or greater.

The fluororesin is a TFE/HFP/PAVE copolymer. The TFE/HFP/PAVE copolymer is superior to polytetrafluoroethylene in that it is melt-moldable with high productivity. The TFE/HFP/PAVE copolymer has a lower melting point and is more easily moldable than a tetrafluoroethylene/perfluoroalkyl vinyl ether copolymer. The TFE/HFP/PAVE copolymer has a better MIT folding endurance and better tensile elongation at 150°C than a tetrafluoroethylene/hexafluoropropylene copolymer. The TFE/HFP/PAVE copolymer has a higher melting point and therefore has better durability such that it can maintain its shape and less suffer damage even after long-term exposure to a 150°C environment, and has a lower relative permittivity and is therefore better than polyvinyl chloride, polyethylene, and polypropylene.

The TFE/HFP/PAVE copolymer preferably has a ratio by mass (TFE/HFP/PAVE) of (87.0 to 90.0)/(9.5 to 12.5)/(0.5 to 3.5) (% by mass). Too small an amount of HFP may cause a low MIT folding endurance, while too large an amount of HFP may cause a low melting point and may cause poor suitability for a 150°C environment. Too small an amount of PAVE may cause a low MIT folding endurance, while too large an amount of PAVE may cause a low melting point and may cause poor suitability for a 150°C environment.

The amount of the HFP unit and the amount of the PAVE unit can be determined by ¹⁹F-NMR.

The TFE/HFP/PAVE copolymer may further contain a different ethylenic monomer (α) unit. The different ethylenic monomer (α) unit may be any monomer unit copolymerizable with TFE, HFP, and PAVE. Examples thereof include a fluorine-containing ethylenic monomer of a perfluorocopolymer, such as a perfluoro(alkyl allyl ether), and a non-fluorinated ethylenic monomer such as ethylene. The amount of the different ethylenic monomer (α) unit is preferably 0 to 3% by mass. A perfluorocopolymer is preferred because it has much better electrical characteristics.

In the case where the copolymer is a TFE/HFP/PAVE/different ethylenic monomer (α) copolymer, the ratio by mass (TFE/HFP/PAVE/different ethylenic monomer (α)) is preferably (87.0 to 90.0)/(9.5 to 12.5)/(0.5 to 3.5) / (0 to 3) (% by mass).

The TFE/HFP/PAVE copolymer may be produced by appropriately mixing monomers that serve as structural units with any additive such as a polymerization initiator, followed by a conventionally known method such as emulsion polymerization, solution polymerization, or suspension polymerization.

In the TFE/HFP/PAVE copolymer, the PAVE more preferably includes at least one selected from the group consisting of perfluoro(methyl vinyl ether), perfluoro(ethyl vinyl ether), and perfluoro(propyl vinyl ether) (PPVE). In terms of MIT folding endurance, PPVE is still more preferred. The fluororesin is preferably a TFE/HFP/PPVE copolymer.

The fluororesin has a relative permittivity of 2.2 or lower measured at 25°C and 6 GHz. This fluororesin has a higher relative permittivity than polyethylene, which is widely used as a covering of communication wires. A relative permittivity within the above range can lead to an electric wire having excellent signal transmission performance and is advantageous in providing a thinner electric wire. The relative permittivity is preferably lower than 2.2, more preferably 2.1 or lower. The lower limit thereof is higher than 1.8, although not limited thereto.

The relative permittivity is a value measured by a resonant cavity perturbation method at 25°C and 6 GHz.

The fluororesin has an MFR of 20 to 40 g/10 min measured at 372°C under a 5-kg load. The fluororesin having a MFR within the above range can provide a thin covering layer having a uniform capacitance on a small-diameter conductor, which contributes to production of an electric wire including a covering that has an excellent MIT folding endurance and tensile elongation at 150°C and therefore less suffers damage even after long-term exposure to a 150°C environment.

A smaller MFR leads to a better MIT folding endurance and tensile elongation at 150°C. The MFR is preferably 38 g/10 min or lower, more preferably 37 g/10 min or lower. In order to produce a thin covering layer having a uniform capacitance on a small-diameter conductor, a higher MFR is preferred. The MFR is preferably 21 g/10 min or higher, more preferably 22 g/10 min or higher, still more preferably 24 g/10 min or higher, particularly preferably 30 g/10 min or higher.

The MFR can be measured at 372°C under a 5-kg load in accordance with ASTM D1238-98.

The fluororesin has a melting point of 250°C or higher. In order to maintain the shape of the covering even after long-term exposure to a 150°C environment, a high melting point is preferred. The melting point is preferably 252°C or higher, more preferably 253°C or higher, still more preferably 254°C or higher, particularly preferably 255°C or higher, most preferably 256°C or higher. In order to achieve easy melt-molding, a low melting point is preferred. The melting point is preferably 280°C or lower, more preferably 265°C or lower, still more preferably 263°C or lower, particularly preferably 261°C or lower, most preferably 260°C or lower.

The melting point is a value determined from the peak temperature of an endothermic curve obtained by thermal analysis at a temperature-increasing rate of 10°C/min in conformity with ASTM D-4591 using a differential scanning calorimeter.

The fluororesin has an MIT folding endurance of 2000 times or more. The greater the MIT folding endurance, the higher the resistance to folding and the higher the resistance to a repeated stress from vibration. The MIT folding endurance is preferably 2200 times or more, more preferably 2400 times or more, still more preferably 2500 times or more, most preferably 2600 times or more. The upper limit of the MIT folding endurance may be, but is not limited to, 300000 times. An MIT folding endurance within the above range is particularly suitable for an in-vehicle network cable which may have an issue associated with folding or vibration.

The MIT folding endurance is a value obtained by producing a 0.2-mm-thick press sheet by compression molding and then performing MIT measurement thereon in conformity with ASTM D-2176 at a test temperature of 23°C, a rotation angle of 135 degrees in each of the left and right directions, and a folding speed of 175 cpm.

The fluororesin has a tensile elongation (EL) at 150°C of 300% or higher. When the covering layer of the electric wire is folded at an acute angle, a portion of the covering layer outside the folding is stretched. Thus, in order to prevent damage on the covering of the electric wire, a high tensile elongation is preferred. The tensile elongation is more preferably 310% or higher, still more preferably 320% or higher, particularly preferably 330% or higher. The tensile elongation is preferably as high as possible. The upper limit thereof may be, but is not limited to, 1000%.

The tensile elongation (EL) at 150°C is a value measured at 150°C under a condition of 50 mm/min in conformity with ASTM D638.

As described above, in the disclosure, the covering has a high melting point, a high MIT folding endurance, and a high tensile elongation at 150°C, so that the electric wire includes a covering that can maintain its shape and less suffer damage even after long-term exposure to a 150°C environment.

In order to achieve much better electrical characteristics, the fluororesin preferably has a loss tangent of 0.0006 or lower measured at 25°C and 6 GHz. Use of the specific fluororesin in the disclosure can lead to a loss tangent within the above range, which can provide an electric wire having much better signal transmission performance and is advantageous in providing a thinner electric wire. The loss tangent is more preferably 0.0005 or lower, still more preferably 0.0004 or lower. The lower limit may be, but is not limited to, higher than 0.0002. The relative permittivity is a value measured by a resonant cavity perturbation method at 25°C and 6 GHz.

The above loss tangent can be achieved by fluorinating the fluororesin. In other words, the fluororesin preferably has undergone fluorination. Also, the fluororesin contained in the fluororesin material of the disclosure preferably has a -CF₃ end group.

The fluorination can be performed, for example, by a known method disclosed in JP 6134818 B, specifically by contacting a non-fluorinated fluororesin with a fluorine-containing compound. The fluorine-containing compound may be, but is not limited to, a fluorine radical source that generates a fluorine radical under fluorination conditions. Examples of the fluorine radical source include F₂ gas, CoF₃, AgF₂, UF₆, OF₂, N₂F₂, CF₃OF, and halogen fluorides (e.g., IF₅, ClF₃). The fluorine radical source such as F₂ gas may have a concentration of 100%. Still, in terms of safety, it is preferably mixed with inert gas and diluted to 5 to 50% by mass for use, more preferably diluted to 15 to 30% by mass for use. Examples of the inert gas include nitrogen gas, helium gas, and argon gas. From an economic point of view, nitrogen gas is preferred.

The conditions for the fluorination are not limited. A fluororesin in a molten state and a fluorine-containing compound may be brought into contact with each other. Still, the fluorination can be commonly performed at a temperature not higher than the melting point of the fluororesin, preferably 20°C to 220°C, more preferably 100°C to 200°C. The fluorination is typically performed for 1 to 30 hours, preferably 5 to 25 hours. The fluorination is preferably performed by contacting a non-fluorinated fluororesin with fluorine gas (F₂ gas).

In terms of electrical characteristics and weight reduction, the covering may be one having voids in the covering layer, such as a foamed covering. In the case of a covering obtainable by foaming, it may contain a foam nucleating agent. Examples of the foam nucleating agent used include known foam nucleating agents disclosed in JP 2010-513676 A, JP 5757347 B, and US 4,764,538 B. The amount of the foam nucleating agent contained in the covering may be determined as appropriate in accordance with the use of the electric wire to be obtained, and may be, for example, 0.1 to 10% by mass relative to the covering.

The covering may further contain a thermoplastic resin other than the fluororesin, which may be provided by stacking, for example. Examples of the thermoplastic resin other than the fluororesin include general-purpose resins such as polyethylene resin, polypropylene resin, vinyl chloride resin, and polystyrene resin; and engineering plastics such as nylon, polycarbonate, polyether ether ketone resin, and polyphenylene sulfide resin. In terms of electrical characteristics, the layer of a thermoplastic resin other than the fluororesin preferably amounts to 60% or less, more preferably 50% or less, still more preferably 40% or less, particularly preferably 30% or less.

The covering contains the fluororesin. The covering may consist only of the fluororesin, or may contain a conventionally known filler or other material in addition to the fluororesin to the extent that it does not impair the effects of the electric wire for an in-vehicle network cable of the disclosure. In terms of electrical characteristics, the covering preferably contains the fluororesin in an amount of 70% by mass or more, more preferably 80% by mass or more, still more preferably 90% by mass or more, particularly preferably 95% by mass or more, most preferably 99% or more.

The filler used may be a known filler as disclosed in JP 6134818 B, and examples thereof include graphite, carbon fiber, coke, silica, zinc oxide, magnesium oxide, tin oxide, antimony oxide, calcium carbonate, magnesium carbonate, glass, talc, mica, mica, aluminum nitride, calcium phosphate, sericite, diatomaceous earth, silicon nitride, fine silica, alumina, zirconia, quartz powder, kaolin, bentonite, and titanium oxide. The filler may be in any form, such as fibers, needles, powder, granules, or beads.

The covering may further contain a different component such as known additives as disclosed in JP 6134818 B, for example. Examples of the different component include fillers such as glass fiber, glass powder, and asbestos fiber, a reinforcing agent, a stabilizer, a lubricant, a pigment, and other additives.

The disclosure provides an electric wire having a small variation in capacitance. The variation in capacitance evaluates the uniformity of the capacitance of the electric wire covering. A smaller variation in capacitance indicates a more uniform capacitance of the electric wire covering. Occurrence of cone break indicates a failure in producing an electric wire including a covering that has a stably uniform capacitance. The worse the uniformity of the capacitance, the greater the transmission loss of the electric wire. The better the uniformity of the capacitance, the smaller the transmission loss of the electric wire.

The disclosure provides an electric wire that less suffers crack even when it is wound around another electric wire having the same diameter, heated at 150°C for one month, and then unwound. This feature of the electric wire indicates that the covering can maintain its shape and less suffer damage even after long-term exposure to a 150°C environment.

In terms of improvement in electrical characteristics and weight reduction, the electric wire for an in-vehicle network cable of the disclosure is preferably a foamed electric wire containing voids in the covering. In terms of easy deformation of the covering layer, the electric wire for an in-vehicle network cable of the disclosure is preferably a solid wire. The solid wire means a wire in which the covering contains substantially no void therein, and may also be referred to as an electric wire including a solid covering layer.

The in-vehicle network cable of the disclosure includes the aforementioned electric wire for an in-vehicle network cable of the disclosure. The disclosure also provides the use of an in-vehicle network cable for in-vehicle network.

Examples of forms of the in-vehicle network cable of the disclosure include a coaxial cable, a twisted pair cable, a two-core flat cable, a four-core flat cable, and an eight-core flat cable.

The coaxial cable may be, for example, a cable including the aforementioned electric wire for an in-vehicle network cable of the disclosure, an outer conductor layer of metal (e.g., metal mesh) surrounding the electric wire, and a resin layer (sheath layer) surrounding the outer conductor layer. The resin layer (sheath layer) may be, but is not limited to, a layer of a resin such as a fluorine-containing copolymer containing a TFE unit, e.g., a TFE/HFP copolymer or a TFE/PAVE copolymer, polyvinyl chloride (PVC), or polyethylene. The outer conductor layer and the resin layer (sheath layer) can be provided around the respective under layers by conventionally known methods.

Preferably, the in-vehicle network cable of the disclosure includes a twisted pair cable including a pair of electric wires twisted together and at least one of the pair of electric wires is the aforementioned electric wire for an in-vehicle network cable of the disclosure. Use of a twisted pair cable can reduce the influence of noise, and therefore a twisted pair cable is particularly suitable as an in-vehicle network cable to which a large amount of noise is likely to occur.

The in-vehicle network cable of the disclosure may include one pair of twisted pair cables, or may include two or more pairs of twisted pair cables. The number of twisted pair cables is preferably 1 to 4, more preferably 1 or 2, still more preferably 1.

The in-vehicle network cable of the disclosure preferably includes a jacket surrounding the twisted pair cable. Examples of material of the jacket include, but are not limited to, resins such as fluorine-containing copolymers containing a TFE unit, e.g., a TFE/HFP copolymer and a TFE/PAVE copolymer, polyvinyl chloride (PVC), and polyethylene. The thickness of the jacket is not limited and may be set as appropriate in accordance with the purpose.

The in-vehicle network cable of the disclosure may include an outer conductor layer of metal (e.g., metal mesh, aluminum foil) around the twisted pair cable. The outer conductor layer functions as a shield, further improving the stability. In terms of lightweightness and foldability, the absence of a shield is preferred.

The in-vehicle network cable of the disclosure is preferably an in-vehicle ethernet cable, specifically, more preferably a 100BASE-T1 or 1000BASE-T1 network cable.

The disclosure also provides an in-vehicle network system including an in-vehicle computer and the in-vehicle network cable of the disclosure connected to the in-vehicle computer.

The in-vehicle network system of the disclosure includes at least one in-vehicle computer, and may include two or more in-vehicle computers. The in-vehicle computer and the in-vehicle network cable of the disclosure may be connected directly or may be connected indirectly. For example, the in-vehicle network cable of the disclosure and the in-vehicle computer may be connected via a component such as a hub or a router.

The in-vehicle computer may be any computer to be mounted on a vehicle, and examples thereof include an in-vehicle electronic control unit (in-vehicle ECU) and an in-vehicle telematics control unit (in-vehicle TCU).

The in-vehicle network system of the disclosure may include a first in-vehicle computer, a second in-vehicle computer, and the in-vehicle network cable of the disclosure connecting the first in-vehicle computer and the second in-vehicle computer.

### EXAMPLES

Next, the disclosure is described with reference to examples, but the disclosure is not limited to these examples.

### <Measurement of physical properties>

### (1) Melting point

The melting point was determined from the peak of an endothermic curve obtained by thermal analysis at a temperature-increasing rate of 10°C/min in conformity with ASTM D-4591 using a differential scanning calorimeter (trade name: X-DSC7000, available from Hitachi High-Tech Science Corp.).

### (2) Melt flow rate (MFR)

In conformity with ASTM D1238-98 and using a melt index tester (available from Toyo Seiki Seisaku Sho, Ltd.), about 6 g of a resin was put into a cylinder kept at 372°C and left for five minutes so that the temperature reached an equilibrium state. The resin was then extruded through an orifice having a diameter of 2 mm and a length of 8 mm under a piston load of 5 kg. The mass (g) of the resin collected per unit time (commonly 10 to 60 seconds) was measured. The measurement was performed three times for a single sample and the average thereof was converted into the amount extruded per 10 minutes (unit: g/10 min), which was taken as the measured value.

### (3) Composition

¹⁹F-NMR measurement was performed using an NMR spectrometer (e.g., AVANCE 300 high temperature probe available from Bruker Biospin) at a measurement temperature of (melting point of polymer + 20)°C. The composition was determined from the integral values of the respective peaks.

### (4) Relative permittivity and loss tangent (tan δ)

Melt extrusion was performed at a temperature of (melting point of polymer + about 30°C), whereby a cylindrical measurement sample having a diameter of 2.3 mm and a length of 80 mm was produced. For this measurement sample, the relative permittivity and loss tangent at 6 GHz were measured by the resonant cavity perturbation method using a network analyzer (available from Kanto Electronic Application and Development Inc.) (test temperature: 25°C). The measured value of the relative permittivity was rounded to the first decimal place and the measured value of the loss tangent was rounded to the fourth decimal place.

### (5) MIT folding endurance

A 0.2-mm-thick press sheet was produced by compression molding and MIT measurement was performed thereon in conformity with ASTM D-2176. A No. 307 MIT type folding endurance tester (available from Yasuda Seiki Seisakusho Ltd.) was used and the measurement conditions included a test temperature of 23°C, a rotation angle of 135 degrees in each of the left and right directions, and a folding speed of 175 cpm. The MIT folding endurance is an index of the flex resistance. The higher the value is, the better the flex resistance and the higher the crack resistance against physical stress.

### (6) Tensile elongation (EL) at 150°C

Pellets obtained in an example or comparative example was molded into a disc having a diameter of 120 mm and a thickness of 1.5 mm using a heat press molding machine, whereby a test piece (compression molding) was obtained. An ASTM Type V dumbbell was used to cut a dumbbell-shaped test piece out of the above test piece. For the resulting dumbbell-shaped test piece, the tensile elongation at 150°C was measured under a condition of 50 mm/min using an autograph (AGS-J 5 kN available from Shimadzu Corp.) in conformity with ASTM D638.

### (7) Variation in capacitance on average over 30000 m

The capacitance was measured for two hours using a capacitance meter Capac HS (Type: MR20.50HS, available from Zumbach), and the variation thereof was calculated as the process capability index (Cp). The Cp values were stored one by one in USYS 2000 (available from Zumbach) and analyzed with the upper limit (USL) and the lower limit (LSL) respectively set to +1.0 (pf/inch) and -1.0 (pf/inch).

Occurrence of cone break, as shown in Table 1, prevented continuous molding, resulting in a failure in determining the variation in capacitance.

### (8) Long-term 150°C retention test on electric wire

Ten 20-cm-long electric wires were cut out of a covered electric wire obtained by electric wire molding in each of the examples and comparative examples, each of which was used as a test piece. For the electric wire of Comparative Example 1, a portion where a covered electric wire was successfully formed was selected and cut into a test piece.

These test pieces were each wound around an electric wire having the same diameter as the test piece and heated at 150°C for one month. The test piece was cooled at room temperature and the electric wire as the test piece was unwound. The number of cracked electric wires was counted visually and using a magnifying glass. If even a single crack is present in one electric wire, this electric wire was evaluated as cracked. Cases where no electric wire was regarded as cracked were evaluated as good, while cases where one or more electric wires were regarded as cracked were evaluated as poor. Table 1 shows the results.

### (Example 1)

Fluorinated pellets of a TFE/HFP/PPVE copolymer (TFE/HFP/PPVE = 87.9/11.1/1.0 (ratio by mass), MFR: 24 (g/10 min)) were obtained by the same method as in Example 2 of JP 2011-514407 A. The resulting pellets were used to evaluate the physical properties of the copolymer, and the results are shown in Table 1. Also, the resulting pellets were used for molding of an electric wire covering under the following molding conditions, whereby an electric wire (solid wire) was obtained. The conditions for extrusion molding the electric wire covering are as follows.

### Molding conditions 1

a) core conductor: mild steel wire AWG (American Wire Gauge) 24, core diameter 20.1 mil
b) thickness of covering: 7.2 mil
c) diameter of covered electric wire: 34.5 mil
d) electric wire winding speed: 1800 feet/min
e) melt molding (extrusion) conditions:
   - diameter of cylinder shaft = 2 inches, single-screw extrusion molding machine having L/D = 30
   - die (inner diameter)/tip (outer shape) = 8.71 mm/4.75 mm
   - preset temperature of extruder: barrel section Z1 (338°C), barrel section Z2 (360°C), barrel section Z3 (371°C), barrel section Z4 (382°C), barrel section Z5 (399°C), clamp section (404°C), adapter section (404°C), crosshead section (404°C), and die section (404°C), with core wire preheating set to 140°C

The results of evaluating the variation in capacitance on average over 30000 m were shown in Table 1.

### (Example 2)

Fluorinated pellets of a TFE/HFP/PPVE copolymer (TFE/HFP/PPVE = 87.6/11.5/0.9 (ratio by mass), MFR: 35 (g/10 min)) were obtained by the same method as in Example 1 of JP 2010-539252 A. The resulting pellets were used to evaluate the physical properties of the TFE/HFP/PPVE copolymer, and the results are shown in Table 1. Also, the resulting pellets were used for molding of an electric wire covering as in Example 1, whereby an electric wire (solid wire) was obtained. The results of evaluating the variation in capacitance on average over 30000 m were shown in Table 1.

### (Example 3)

Fluorinated pellets of a TFE/HFP/PPVE copolymer (TFE/HFP/PPVE = 87.5/11.5/1.0 (ratio by mass), MFR: 37 (g/10 min)) were obtained by the same method as in Example 1 of JP 6134818 B. The resulting pellets were used to evaluate the physical properties of the TFE/HFP/PPVE copolymer, and the results are shown in Table 1. Also, the resulting pellets were used for molding of an electric wire covering as in Example 1, whereby an electric wire (solid wire) was obtained. The results of evaluating the variation in capacitance on average over 30000 m were shown in Table 1.

### (Comparative Example 1)

Pellets of a TFE/HFP copolymer (TFE/HFP = 86.5/13.5 (ratio by mass), MFR: 17 (g/10 min)) were obtained by the same method as in Example 3 of WO 2001/018076. The resulting pellets were used to evaluate the physical properties of the TFE/HFP copolymer, and the results are shown in Table 1. Also, the resulting pellets were used for molding of a covering as in Example 1, but this resulted in a failure in continuous molding.

### (Comparative Example 2)

Pellets of a TFE/HFP/PPVE copolymer (TFE/HFP/PPVE = 87.6/11.5/0.9 (ratio by mass), MFR: 44 (g/10 min)) were obtained by the same method as in Example 3 of JP 2010-539252 A. The resulting pellets were used to evaluate the physical properties of the TFE/HFP/PPVE copolymer, and the results are shown in Table 1. Also, the resulting pellets were used for molding of an electric wire covering as in Example 1, whereby an electric wire (solid wire) was obtained. The results of evaluating the variation in capacitance on average over 30000 m were shown in Table 1.

**[Table 1]**

| | Example 1 | Example 2 | Example 3 | Comparative Example 1 | Comparative Example 2 |
|---|---|---|---|---|---|
| MFR (g/10 min) | 24 | 35 | 37 | 17 | 44 |
| Melting point (°C) | 257 | 257 | 257 | 247 | 257 |
| Relative permittivity | 2.1 | 2.1 | 2.1 | 2.1 | 2.1 |
| Loss tangent | 0.0004 | 0.0004 | 0.0004 | 0.0011 | 0.0004 |
| Amount of PAVE (mass%) | 1.0 | 0.9 | 1.0 | 0 | 0.9 |
| Type of PAVE | PPVE | PPVE | PPVE | - | PPVE |
| Amount of HFP (mass%) | 11.1 | 11.5 | 11.5 | 13.5 | 11.5 |
| Tensile elongation at 150°C (%) | 375 | 331 | 323 | 269 | 285 |
| MIT folding endurance (times) | 5800 | 2900 | 2700 | 2000 | 1300 |
| Long-term 150°C retention test on electric wire | Good | Good | Good | Poor | Poor |
| Molding conditions 1 number of cone breaks (times/hr) | 0 | 0 | 0 | 3 | 0 |
| Molding conditions 1 Variation in capacitance (30000 m continuous molding) | Within ±3% | Within ±2% | Within ±2% | Failure in continuous molding | Within ±2% |
| Molding condition 1 Diameter of electric wire (mm) | 0.88 | 0.88 | 0.88 | 0.88 | 0.88 |

The results shown in Table 1 demonstrate that a low relative prermittivity as well as excellent folding resistance and excellent tensile elongation at 150°C were achieved in the examples where the covering contained a fluororesin that is a tetrafluoroethylene/hexafluoropropylene/perfluoro(alkyl vinyl ether) copolymer and that has a melt flow rate of 20 to 40 g/10 min measured at 372°C under a 5-kg load, a relative permittivity of 2.2 or lower measured at 25°C and 6 GHz, a melting point of 250°C or higher, an MIT folding endurance of 2000 times or more, and a tensile elongation at 150°C of 300% or higher. Therefore, the disclosure also has an effect of providing an electric wire for an in-vehicle network cable having a low relative permittivity and excellent folding resistance, as well as an effect of being excellent in tensile elongation at 150°C.

## Claims

1. An electric wire for an in-vehicle network cable, comprising:
a conductor; and
a covering that covers a periphery of the conductor,
the electric wire having a diameter of 0.5 to 1.5 mm,
the covering comprising a fluororesin that comprises a tetrafluoroethylene/hexafluoropropylene/perfluoro(alkyl vinyl ether) copolymer,
the fluororesin having a melt flow rate of 20 to 40 g/10 min measured at 372°C under a 5-kg load, a relative permittivity of 2.2 or lower measured at 25°C and 6 GHz, a melting point of 250°C or higher, an MIT folding endurance of 2000 times or more, and a tensile elongation at 150°C of 300% or higher.

2. The electric wire for an in-vehicle network cable according to claim 1,
wherein the fluororesin has a loss tangent of 0.0006 or lower measured at 25°C and 6 GHz.

3. The electric wire for an in-vehicle network cable according to claim 1 or 2,
wherein the fluororesin comprises a tetrafluoroethylene/hexafluoropropylene/perfluoro(propyl vinyl ether) copolymer.

4. An in-vehicle network cable comprising the electric wire for an in-vehicle network cable according to any one of claims 1 to 3.

5. The in-vehicle network cable according to claim 4, comprising a twisted pair cable comprising a pair of electric wires twisted together,
wherein at least one of the pair of electric wires is the electric wire for an in-vehicle network cable according to any one of claims 1 to 3.
